# DEMANDE DE BREVET EUROPEEN

(11) **EP 2 690 137 A1**
(43) Date de publication de la demande: **29.01.2014**
(21) Numéro de dépôt: 13177239.4
(22) Date de dépôt: 19.07.2013
(51) Int. Cl.: C08L 23/16, C08K 5/00

(54) **Composition de caoutchouc à base d'au moins un EPDM et d'un matériau à changement de phase, tuyau l'incorporant et procédé de préparation de cette composition.**

(30) Priorité: 25.07.2012 FR 1257217
(71) Demandeur: HUTCHINSON, 75008 Paris (FR)
(72) Inventeur: Van Eibergen, Arthur, 45120 MONTARGIS (FR); Swoboda, Benjamin, 77590 BOIS LE ROI (FR); Le Rossignol, Benoit, 45200 MONTARGIS (FR); Dominiak, Christophe, 45290 VARENNES-CHANGY (FR)
(74) Mandataire: Bolinches, Michel Jean-Marie

(57) **Abrégé**

La présente invention concerne une composition de caoutchouc réticulée à base d'au moins un élastomère de type terpolymère éthylène-propylène-diène (EPDM) et d'au moins un matériau à changement de phase (MCP), un procédé de préparation de cette composition et un tuyau multicouches l'incorporant.

Cette composition comprend au moins 100 pce (pce : parties en poids pour cent parties d'élastomère(s)) d'au moins un matériau à changement de phase (MCP), et elle est telle que ledit au moins un MCP est dispersé dans la composition réticulée et est pourvu de moyens de protection aptes à y empêcher sa dispersion à une température supérieure à son point de fusion, laquelle composition présente une résistance à la rupture supérieure à 3 MPa et/ou un allongement à la rupture supérieur à 100 %, ces propriétés étant mesurées à 23° C selon la norme ASTM D 412.

## Description

La présente invention concerne une composition de caoutchouc réticulée à base d'au moins un élastomère de type terpolymère éthylène-propylène-diène (EPDM) et d'au moins un matériau à changement de phase (MCP en abrégé), un procédé de préparation de cette composition et un tuyau multicouches l'incorporant.

L'incorporation à des matrices polymériques de matériaux MCP tels que des acides gras, des sels ou des paraffines, notamment, pour libérer ou absorber de la chaleur par changement d'état grâce à la chaleur latente de fusion qui caractérise ces MCP, est connue de longue date. En effet, ces MCP présentent l'avantage de passer de l'état liquide à l'état solide en libérant de la chaleur lors de leur cristallisation, et inversement de passer de l'état solide à l'état liquide en absorbant de la chaleur lors de leur fusion. Il est connu d'utiliser ces MCP sous forme de poudre avec des nodules dispersés dans une matrice thermoplastique ou élastomère, ou en les encapsulant dans des microsphères par exemple plastiques, ou encore en les greffant sur un support, à titre non limitatif.

Le document US-A-4 617 332 enseigne à son exemple 3 de préparer une composition de caoutchouc réticulée à base d'un EPDM dans laquelle est dispersé sous forme de poudre un MCP de type cire paraffinique selon une quantité allant de 33 à 66 pce seulement (pce : parties en poids pour cent parties d'élastomère). Un inconvénient majeur de cette composition réside dans son taux de MCP relativement faible, qui ne lui confère pas une enthalpie massique de changement d'état ΔH suffisante en vue d'absorber et de restituer l'énergie thermique nécessaire au contrôle de la température d'un fluide transporté par un tuyau.

Le document EP-A1-0 412 021 enseigne de mélanger à l'état fondu des quantités égales ou supérieures à 500 pce d'un MCP paraffinique sous forme de poudre à un liant polymérique constitué d'un EPDM, pour l'obtention de compositions réticulées dans lesquelles le MCP ne se trouve pas à l'état de phase dispersée mais de phase continue, du fait de son taux excessivement élevé dans ces compositions et des températures de mélangeage et de réticulation supérieures à 100° C qui provoquent une inversion de phase.

Il résulte de cette inversion de phase que ces compositions à base de MCP ne présentent pas les propriétés mécaniques de souplesse et d'élasticité requises pour être utilisées dans des tuyaux multicouches soumis à des déformations importantes en fonctionnement.

Un but de la présente invention est de proposer une composition de caoutchouc réticulée à base d'au moins un EPDM et comprenant au moins 100 pce d'au moins un MCP qui remédie à cet inconvénient d'inversion de phase malgré cette quantité très élevée de MCP, tout en présentant un compromis satisfaisant de propriétés mécaniques et thermiques rendant cette composition utilisable pour constituer une couche intermédiaire d'un tuyau multicouches véhiculant un fluide à réchauffer ou à refroidir.

A cet effet, une composition selon l'invention est telle que ledit au moins un MCP y est dispersé et est pourvu de moyens de protection aptes à empêcher la dispersion dudit au moins un MCP dans la composition réticulée à une température supérieure à son point de fusion (i.e. à l'état fondu du ou de chaque MCP), laquelle composition réticulée présente une résistance à la rupture supérieure à 3 MPa et/ou un allongement à la rupture supérieur à 100 %, ces propriétés étant mesurées à 23° C selon la norme ASTM D 412 (i.e. selon la norme équivalente ISO 37).

On notera que ces moyens de protection du ou des MCP permettent de les incorporer lors du mélangeage suivant une quantité de MCP très élevée (égale ou supérieure à 100 pce, avantageusement égale ou supérieure à 150 pce et encore plus avantageusement supérieure à 200 pce voire à 225 pce) tout en parvenant à les conserver sous une phase discontinue suite à la mise en oeuvre et la réticulation de la composition, en formant dans la phase continue à base du ou des EPDM des nodules dispersés formés de ce(s) MCP ainsi protégés. On évite ainsi l'inversion de phase indésirable précitée où le MCP constitue la phase continue contenant des nodules d'EPDM.

On notera également que cette quantité très élevée de MCP utilisée dans la composition, qui permet avantageusement de conférer à celle-ci une enthalpie massique de changement d'état ΔH supérieure à 80 J/g et encore plus avantageusement supérieure à 120 J/g, combinée à ces valeurs élevées de résistance à la rupture et d'allongement à la rupture atteintes pour la composition, témoignent d'un compromis très satisfaisant entre propriétés thermiques et mécaniques pour les compositions de l'invention. En effet, ces dernières présentent ainsi non seulement une aptitude élevée à absorber ou restituer l'énergie thermique stockée mais en outre des propriétés caoutchouteuses acceptables en dépit de cette quantité très élevée de MCP, ce qui rend ces compositions notamment utilisables pour constituer une sous-couche fonctionnelle d'un tuyau multicouches.

Encore plus avantageusement, la composition selon l'invention peut présenter une résistance à la rupture égale ou supérieure à 5 MPa (voire égale ou supérieure à 7 MPa) et/ou un allongement à la rupture supérieur à 200 % (voire supérieur à 300 %), ces propriétés étant toujours mesurées à 23° C selon la norme ASTM D 412.

Egalement avantageusement, cette composition peut présenter une résistance à la rupture supérieure à 1 MPa (voire supérieure à 3 MPa) et/ou un allongement à la rupture supérieur à 500 % (voire supérieur à 700 %), ces propriétés étant cette fois mesurées à 100° C selon la norme ASTM D 412.

Selon une autre caractéristique de l'invention, lesdits moyens de protection peuvent comprendre des capsules enveloppant ledit au moins un MCP, et/ou des supports sur lesquels ledit au moins un MCP est adsorbé ou greffé. De préférence, ledit au moins un MCP comprend alors une cire paraffinique qui dans ce premier cas est encapsulée dans des microsphères plastiques formant ces capsules et présentant un point de fusion supérieur à la température de réticulation de la composition et, dans ce second cas, est adsorbée ou greffée sur ces supports qui sont formés d'une charge inorganique sous forme de microparticules (i.e. de particules de plus grande dimension transversale moyenne comprise entre 1 µm et 400 µm environ).

On notera que ces moyens de protection du ou des MCP permettent également d'améliorer la résistance au vieillissement thermique de la composition de l'invention, préservant ainsi ses propriétés plus longtemps que les compositions des documents précités à MCP ni encapsulés ni supportés.

Avantageusement, ledit au moins un MCP, lesdits moyens de protection étant exclus, peut présenter un point de fusion supérieur à 50° C et encore plus avantageusement supérieur à 80° C, contrairement aux MCP des documents précités qui présentent des points de fusion inférieurs à 70° C, voire inférieurs à 50° C.

Avantageusement, ladite composition selon l'invention comprend en outre, selon une quantité comprise entre 5 et 150 pce, un système plastifiant comprenant au moins un plastifiant paraffinique.

Encore plus avantageusement, ledit système plastifiant peut être constitué dudit au moins un plastifiant paraffinique, lequel est présent dans la composition de l'invention selon une quantité inclusivement comprise entre 8 et 50 pce.

On notera la Demanderesse a mis en évidence que ce système plastifiant contribue à l'obtention desdites propriétés mécaniques satisfaisantes (i.e. du compromis précité entre résistance à la rupture et allongement à la rupture), en dépit de la quantité très élevée de MCP incorporée à la matrice élastomère de la composition de l'invention.

Par composition de caoutchouc « à base d'au moins un EPDM », on entend dans la présente description une composition dont la matrice élastomère est majoritairement constituée (i.e. selon une quantité supérieure à 50 pce, de préférence supérieure à 75 pce) d'un ou de plusieurs EPDM. En d'autres termes, une composition selon l'invention pourrait avoir sa matrice élastomère comprenant un ou plusieurs EPDM selon une quantité totale supérieure à 50 pce et optionnellement un ou plusieurs autres élastomères selon une quantité totale inférieure à 50 pce, étant précisé que la matrice élastomère de la composition selon l'invention est de préférence exclusivement constituée d'un ou de plusieurs EPDM.

A titre encore plus préférentiel, cette matrice élastomère est constituée de plusieurs dits élastomères EPDM qui sont chacun issus d'éthylidène norbornène (ENB) à titre de diène, dont l'un majoritaire dans la matrice présente une viscosité Mooney ML(1+8) à 125° C mesurée selon la norme ASTM D 1646 comprise entre 75 et 90, et dont l'autre minoritaire dans la matrice présente une viscosité Mooney ML(1+4) à 125° C mesurée selon la norme ASTM D 1646 comprise entre 40 et 55 et est étendu par une huile d'extension paraffinique, la composition étant réticulée par un peroxyde.

D'une manière générale, les compositions de l'invention peuvent comprendre ce(s) MCP à l'état pur ou bien en combinaison avec des charges (par exemple métalliques ou carbonées, telles que le graphite, le graphène ou des nanotubes de carbone) pour augmenter la conductivité thermique du ou de chaque MCP, et/ou avec des retardateurs de flamme, et/ou avec des agents anti-vieillissement (e.g. des stabilisants vis-à-vis des rayonnements UV et des anti-oxydants).

Selon un autre aspect de l'invention, ladite composition réticulée présente une dureté Shore A, mesurée selon la norme ASTM D 2240, comprise entre 40 et 100 et de préférence entre 60 et 90.

Un tuyau multicouches de transfert de fluide selon l'invention comprend deux couches radialement interne et externe et au moins une couche intermédiaire radialement entre ces deux couches qui est constituée d'une composition réticulée telle que définie ci-dessus, ces couches interne et externe étant de préférence également à base d'au moins un EPDM.

Avantageusement, ce tuyau selon l'invention peut être inclus dans un circuit de régulation thermique d'un moteur thermique de véhicule automobile, par exemple transférant un liquide de refroidissement du moteur.

Un exemple particulièrement intéressant d'application d'un tel tuyau pour liquide de refroidissement selon l'invention incorporant ces MCP concerne le réchauffement de ce liquide lors du redémarrage du moteur du véhicule. En effet, après que le moteur a été arrêté, le liquide de refroidissement reste pendant un certain temps à une température relativement élevée d'environ 70 à 90° C, ce qui fait que le MCP fondu libère de la chaleur dans ce liquide, lequel est ainsi déjà relativement chaud lorsqu'on redémarre le moteur. Il en résulte une réduction des émissions de gaz carbonique à l'échappement et de la surconsommation de carburant, en comparaison de ce qu'on observe avec un moteur froid.

Un procédé de préparation selon l'invention d'une composition telle que définie ci-dessus comprend essentiellement :
a) un mélangeage à chaud dans un mélangeur interne dudit au moins un élastomère et dudit au moins un MCP préalablement pourvu desdits moyens de protection, en présence d'un système de réticulation que comprend la composition pour l'obtention de la composition réticulable dans laquelle est dispersé ledit au moins un MCP, puis
b) une transformation par exemple par un moulage par injection ou par extrusion de la composition réticulable obtenue en a) conduisant à sa mise en forme et à sa réticulation.

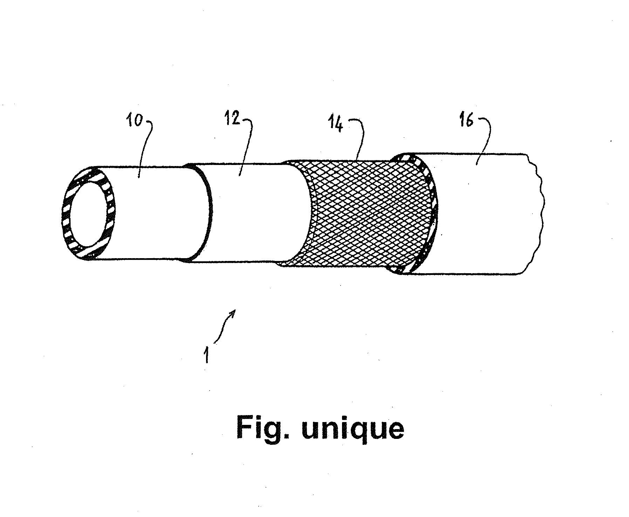

D'autres caractéristiques, avantages et détails de la présente invention ressortiront à la lecture de la description suivante de plusieurs exemples de réalisation de l'invention donnés à titre illustratif et non limitatif, cette description étant réalisée en référence avec le dessin joint, dans lequel :
La figure unique est une vue partielle en perspective avec arrachements partiels d'un tuyau selon un exemple de réalisation de l'invention incorporant ladite composition de caoutchouc.

Le tuyau 1 selon la figure unique est par exemple destiné à transférer un liquide de refroidissement d'un moteur thermique de véhicule automobile et il comprend, radialement de l'intérieur vers l'extérieur :
- une couche interne 10 tubulaire en caoutchouc à base d'au moins un EPDM,
- une couche intermédiaire ou sous-couche 12 tubulaire constituée d'une composition de caoutchouc selon l'invention à base d'au moins un EPDM et d'au moins un MCP dispersé dans cette composition,
- une couche de renforcement 14 tubulaire optionnelle, par exemple à base d'un renfort textile, et
- une couche externe 16 tubulaire en caoutchouc également à base d'au moins un EPDM.

La Demanderesse a préparé cinq compositions de caoutchouc réticulées selon l'invention C1 à C5, dont les formulations respectives (exprimées en pce, i.e. en parties en poids pour cent parties de la matrice élastomère constituée des EPDM utilisés) sont recensées au tableau 1 ci-après et dont les propriétés mécaniques (mesurées à 23° C et à 100° C selon la norme ISO 37 ou son équivalent ASTM D 412) sont présentées au tableau 2 ci-après.

Chacune des compositions C1 à C5 a été préparée par mélangeage à chaud de ses ingrédients dans un mélangeur interne (système de réticulation inclus) pour l'obtention d'une composition réticulable dans laquelle est dispersé le MCP, puis par moulage de cette composition conduisant à sa réticulation et à son façonnage sous forme de feuille.

De plus, chacune de ces compositions réticulées C1 à C5 présentait une dureté Shore A (mesurée selon la norme ASTM D 2240) sensiblement égale à 80, en vue de son utilisation dans la sous-couche 12 du tuyau 1.

**Tableau 1 :**

| Ingrédients | C1 | C2 | C3 | C4 | C5 |
|---|---|---|---|---|---|
| Vistalon 7500 | 80 | 80 | 80 | 80 | 80 |
| Buna EP G 5567 | 35 | 35 | 35 | 35 | 35 |
| PX 82 | - | - | **200** | **225** | **200** |
| Microtek | **250** | **275** | - | - | - |
| Huile paraffinique 1 | - | - | - | - | 25 |
| Huile paraffinique 2 | 10 | 10 | 10 | 10 | - |
| Noir de carbone | 50 | 50 | 50 | 50 | 50 |
| Système de réticulation au peroxyde | 12,7 | 12,7 | 12,7 | 12,7 | 12,7 |

Ces ingrédients présentaient notamment les caractéristiques suivantes :
- Vistalon 7500: EPDM de viscosité Mooney ML(1+8) à 125° C égale à 82 ± 5, de taux massique d'éthylène et d'ENB respectivement égaux à 55,5 ± 2 % et 5,7 ± 0,5 % ;
- Buna EP G 5567: EPDM étendu à l'huile (75 ± 6 pce d'huile), de viscosité Mooney ML(1+4) à 125° C égale à 46 ± 5, de taux massique d'éthylène et d'ENB respectivement égaux à 66 ± 4 % et 5,1 ± 0,8 % ;
- PX 82 : MCP de type paraffine greffée sur un support formé de microbilles de silice (point de fusion : 82° C) ;
- Microtek : MCP de type paraffine encapsulée dans des microsphères de PET (point de fusion : entre 20 et 25° C).

**Tableau 2 :**

| Propriétés | C1 | C2 | C3 | C4 | C5 |
|---|---|---|---|---|---|
| **Caractérisation à 23° C** | | | | | |
| Résistance à la rupture (MPa) | 3,39 | 3,72 | 6,78 | 7,32 | 6,1 |
| Allongement à la rupture (%) | 330 | 238 | 547 | 350 | 542 |
| Module 100 % allongement (MPa) | 1,8 | 2,4 | 5,0 | 6,2 | 4 |

| **Caractérisation à 100° C** | | | | | |
|---|---|---|---|---|---|
| Résistance à la rupture (MPa) | 1,62 | 1,95 | 3,63 | 3,47 | 2,02 |
| Allongement à la rupture (%) | 154 | 111 | 738 | 950 | 684 |
| Module 100 % allongement (MPa) | 1,3 | 1,8 | 1,1 | 0,8 | - |

Comme visible à ce tableau 2 pour les propriétés mesurées à 23° C, les compositions C1 et C2 comprenant notamment au moins 250 pce de paraffine encapsulée à titre de MCP et 10 pce d'un plastifiant paraffinique, présentaient à cette température un allongement à la rupture supérieur à 200 %, voire à 300 % pour C1. Quant aux compositions C3, C4 et C5 comprenant au moins 200 pce de paraffine supportée à titre de MCP et 10 à 25 pce d'un plastifiant paraffinique, elles présentaient à 23° C à la fois une résistance à la rupture supérieure à 5 MPa (voir en particulier C4 dont la résistance à la rupture est supérieure à 7 MPa) et un allongement à la rupture supérieur à 300 % (voir en particulier C3 et C5 dont l'allongement à la rupture est supérieur à 500 %).

Comme également visible à ce tableau 2 pour les propriétés mesurées à 100° C, les compositions préférentielles C3 et C4 selon l'invention présentaient en outre à cette température une résistance à la rupture supérieure à 3 MPa et surtout un allongement à la rupture supérieur à 700 %. En particulier, la composition C4 incorporant 225 pce d'un PCM à base d'une paraffine supportée est particulièrement avantageuse puisqu'elle présentait à 100° C un allongement à la rupture supérieur à 900 %.

De plus, chacune de ces compositions C1 à C5 selon l'invention présentait une enthalpie massique de changement d'état ΔH supérieure à 80 J/g et même supérieure à 120 J/g pour la composition C4.

En conclusion, ces exemples montrent que l'utilisation de MCP protégés dans les compositions C1 à C5 permet de les incorporer lors du mélangeage suivant une quantité de MCP égale ou supérieure à 200 pce tout en parvenant à les conserver sous une phase discontinue suite à la mise en oeuvre et à la réticulation de la composition C1 à C5, et que cette quantité très élevée de MCP jointe à l'utilisation de plastifiants paraffiniques permet d'obtenir un compromis très satisfaisant entre propriétés thermiques et mécaniques pour ces compositions C1 à C5, rendant ces dernières utilisables pour constituer une sous-couche 12 d'un tuyau 1 dont la température du fluide y circulant est à contrôler ou à faire varier.

## Revendications

1. Composition de caoutchouc réticulée à base d'au moins un élastomère de type terpolymère éthylène-propylène-diène (EPDM) et comprenant au moins 100 pce (pce : parties en poids pour cent parties d'élastomère(s)) d'au moins un matériau à changement de phase (MCP), **caractérisée en ce que** ledit au moins un MCP est dispersé dans la composition réticulée et est pourvu de moyens de protection aptes à y empêcher sa dispersion à une température supérieure à son point de fusion, laquelle composition présente une résistance à la rupture supérieure à 3 MPa et/ou un allongement à la rupture supérieur à 100 %, ces propriétés étant mesurées à 23° C selon la norme ASTM D 412.

2. Composition selon la revendication 1, **caractérisée en ce qu'**elle comprend ledit au moins un MCP selon une quantité égale ou supérieure à 150 pce et de préférence égale ou supérieure à 200 pce.

3. Composition selon la revendication 1 ou 2, **caractérisée en ce que** lesdits moyens de protection comprennent des capsules enveloppant ledit au moins un MCP, et/ou des supports sur lesquels ledit au moins un MCP est adsorbé ou greffé.

4. Composition selon la revendication 3, **caractérisée en ce que** ledit au moins un MCP comprend une cire paraffinique encapsulée dans des microsphères plastiques qui forment lesdites capsules et qui présentent un point de fusion supérieur à la température de réticulation de la composition.

5. Composition selon la revendication 3, **caractérisée en ce que** ledit au moins un MCP comprend une cire paraffinique adsorbée ou greffée sur lesdits supports, lesquels sont formés d'une charge inorganique sous forme de microparticules.

6. Composition selon une des revendications précédentes, **caractérisée en ce qu'**elle présente une résistance à la rupture égale ou supérieure à 5 MPa et/ou un allongement à la rupture supérieur à 200 %, ces propriétés étant mesurées à 23° C selon la norme ASTM D 412.

7. Composition selon une des revendications précédentes, **caractérisée en ce qu'**elle présente une résistance à la rupture supérieure à 1 MPa et/ou un allongement à la rupture supérieur à 500 %, ces propriétés étant mesurées à 100° C selon la norme ASTM D 412.

8. Composition selon une des revendications précédentes, **caractérisée en ce qu'**elle présente une enthalpie massique de changement d'état ΔH supérieure à 80 J/g et de préférence supérieure à 120 J/g.

9. Composition selon une des revendications précédentes, **caractérisée en ce qu'**elle comprend en outre, selon une quantité comprise entre 5 et 150 pce, un système plastifiant qui comprend au moins un plastifiant paraffinique et qui est de préférence constitué dudit au moins un plastifiant paraffinique, lequel est alors présent dans la composition selon une quantité inclusivement comprise entre 8 et 50 pce.

10. Composition selon une des revendications précédentes, **caractérisée en ce que** ledit au moins un MCP, lesdits moyens de protection étant exclus, présente un point de fusion supérieur à 50° C et par exemple supérieur à 80° C.

11. Composition selon une des revendications précédentes, **caractérisée en ce qu'**elle est à base d'une matrice élastomère constituée de plusieurs dits élastomères EPDM qui sont chacun issus d'éthylidène norbornène (ENB) à titre de diène, dont l'un majoritaire dans la matrice présente une viscosité Mooney ML(1+8) à 125° C mesurée selon la norme ASTM D 1646 comprise entre 75 et 90, et dont l'autre minoritaire dans la matrice présente une viscosité Mooney ML(1+4) à 125° C mesurée selon la norme ASTM D 1646 comprise entre 40 et 55 et est étendu par une huile d'extension paraffinique, la composition étant réticulée par un peroxyde.

12. Composition selon une des revendications précédentes, **caractérisée en ce qu'**elle présente une dureté Shore A, mesurée selon la norme ASTM D 2240, comprise entre 40 et 100 et de préférence entre 60 et 90.

13. Tuyau multicouches (1) de transfert de fluide comprenant deux couches radialement interne (10) et externe (16) et au moins une couche intermédiaire (12) radialement entre ces deux couches, **caractérisé en ce que** ladite au moins une couche intermédiaire est constituée d'une composition réticulée selon une des revendications précédentes, ces couches interne et externe étant de préférence également à base d'au moins un EPDM.

14. Tuyau (1) selon la revendication 13, **caractérisé en ce qu'**il est inclus dans un circuit de régulation thermique d'un moteur thermique de véhicule automobile, par exemple transférant un liquide de refroidissement du moteur.

15. Procédé de préparation d'une composition selon une des revendications 1 à 12, **caractérisé en ce qu'**il comprend essentiellement :
a) un mélangeage à chaud dans un mélangeur interne dudit au moins un élastomère et dudit au moins un MCP préalablement pourvu desdits moyens de protection, en présence d'un système de réticulation que comprend la composition pour l'obtention de la composition réticulable dans laquelle est dispersé ledit au moins un MCP, puis
b) une transformation par exemple par un moulage par injection ou par extrusion de la composition réticulable obtenue en a) conduisant à sa mise en forme et à sa réticulation.
